(19) Europäisches Patentamt

European Patent Office

Office européen des brevets

(11) **EP 1 123 659 B1**

(12) **EUROPEAN PATENT SPECIFICATION**

(45) Date of publication and mention
of the grant of the patent:
**24.03.2004 Bulletin 2004/13**

(51) Int Cl.⁷: **A23D 9/007**, A23G 1/00,
A23G 9/02

(21) Application number: **01200251.5**

(22) Date of filing: **25.01.2001**

(54) **Fat blends with crystal modifiers**

Fettmischungen mit Kristallmodifikatoren

Mélanges de matières grasses avec des modificateurs de crystaux

(84) Designated Contracting States:
**AT BE CH CY DE DK ES FI FR GB GR IE IT LI LU MC NL PT SE TR**

(30) Priority: **10.02.2000 EP 00301055**

(43) Date of publication of application:
**16.08.2001 Bulletin 2001/33**

(73) Proprietor: **Loders Croklaan B.V.
1521 AZ Wormerveer (NL)**

(72) Inventors:
• **Bhaggan, Krish
1521 AZ Wormerveer (NL)**
• **Cain, Frederick William
1521 AZ Wormerveer (NL)**
• **Pierce, John Hugh, Unilever Res. Colworth
Sharnbrook, Bedford MK44 1LQ (GB)**
• **Rogers, Julia Sarah
Sharnbrook, Bedford MK44 1LQ (GB)**
• **Schmid, Ulrike
1521 AZ Wormerveer (NL)**

(74) Representative: **Stevens, Ian Edward et al
Eric Potter Clarkson,
Park View House,
58 The Ropewalk
Nottingham NG1 5DD (GB)**

(56) References cited:
**EP-A- 0 555 484          US-A- 5 948 460**

• **PATENT ABSTRACTS OF JAPAN vol. 1997, no. 06, 30 June 1997 (1997-06-30) -& JP 09 040689 A (NIPPON FLOUR MILLS CO LTD), 10 February 1997 (1997-02-10)**
• **PATENT ABSTRACTS OF JAPAN vol. 013, no. 227 (C-600), 25 May 1989 (1989-05-25) -& JP 01 039973 A (TAIYO KAGAKU CO LTD), 10 February 1989 (1989-02-10)**
• **PATENT ABSTRACTS OF JAPAN vol. 1997, no. 07, 31 July 1997 (1997-07-31) -& JP 09 067249 A (NIPPON FLOUR MILLS CO LTD), 11 March 1997 (1997-03-11)**
• **PATENT ABSTRACTS OF JAPAN vol. 017, no. 589 (C-1124), 27 October 1993 (1993-10-27) -& JP 05 176712 A (NIPPON FLOUR MILLS CO LTD), 20 July 1993 (1993-07-20)**

**Description**

Fats per se or in the form of fat blends often suffer from problems during crystallisation. E.g. the crystallisation rate often is low or the crystal form of the fats results into products that are not sufficiently hard or are difficult to filter.

In order to cope with this problem the prior art discloses to add crystal modifiers to the fats, such as polymers or hardened fat components. The polymers however are not food grade and thus have to be removed from the food product which is not always easy and, if possible at all, complicates the processing, adding to the costs and making the use thereof economically unattractive. Hardened fats are not always healthy because of their high content of saturated fatty acid and have a negative impact on the viscosity and mouthfeel of the products.

Moreover crystal modifiers that are effective and that simultaneously add health benefits to the food products have not been disclosed yet in the prior art.

Therefore we studied whether we could find crystal modifiers that are effective for improving the crystallisation and the hardness of the product resulting therefrom and that simultaneously will add health benefits to the final food product. This study resulted in the finding that by adding a blend of ursolic acid and oleanolic acid to a fat per se or to a fat in a food product the crystallisation rate of the fat could be increased while simultaneously the hardness of the fat composition could be increased. Further it was found that the addition of the ursolic acid / oleanolic acid mixture also improved other properties of the total composition, such as oral mouthfeel; heat resistance; aeration properties and drying times (when applied in ice-cream coatings).

The known health effects of ursolic acid and oleanolic acid remain in the fat composition and / or the food product made thereof.

Health effects of ursolic acid and oleanolic acid can be found in eg JP 09/040689; JP 09.067249; CN 1085748; JP 1039973; JP 03287531; JP 03287530; EP 774255; JP 07258098; JP 07048260; JP 01132531; FR 2535203 and JP 1207262.

Therefore our invention concerns in the first instance a blend of a vegetable fat and/or a blend of vegetable fats and at least 0.1 wt%, preferably 0.1 to 10 wt%, most preferably 0.2 to 5 wt% of a natural health composition, wherein the natural health composition comprises a mixture of ursolic acid and oleanolic acid in a weight ratio of 1:99 to 99:1, preferably 10:90 to 90:10, more preferably 75:25 to 25:75.

It was found that very beneficial fat compositions could be obtained if the fat in above blend displays a solid fat content measured on a non-stabilised fat by NMR -pulse at the temperature indicated of: 5 to 90 at 5 oC; 2 to 80 at 20 oC and less than 15 at 35 oC.

Non-stabilised being defined as a fat that has been subjected to the following temperature profile before measuring the fat content by NMR pulse: melt at 80 oC and cool to 0 oC and keep at 0 oC for 30 min, than warm up to measurement temperature and keep at that T for 30 min before measuring the N value.

Very useful blends were obtained by making a blend comprising components A, B and C, wherein

A = a natural health composition, comprising a mixture of ursolic acid and oleanolic acid in a weight ratio of 1:99 to 99:1
B = a solid fat with a solid fat content at 20 oC of at least 20, measured on the unstabilised fat by NMR-pulse, preferably at least 45, most preferably at least 60 and
C = a fat with a content of fatty acids with 18 C-atoms with one to three double bonds of at least 40 %,

which components A, B and C are present in amounts of:

at least 0.1 wt% A, preferably 0.1 to 20 wt%, most preferably 0.2 to 10 wt%
8 to 90 wt% of B, preferably 25 to 75 wt%, most preferably 40 to 70 wt% and
0 to 85 wt% of C, preferably 15 to 65 wt%, most preferably 20 to 50 wt%.

Although fats B and C could be selected from a wide range of fats we prefer to use fats B that are selected from the group consisting of palm oil, palm oil fractions, cocoa butter, cocoa butter equivalents, palm kernel oil, fractions of palm kernel oil, hardened vegetable oils such as hardened palm oil, hardened fractions of palm oil, hardened soybean oil, hardened sunflower oil, hardened rape seed oil, hardened fractions of soy, rape or sunflower oil, mixtures of one or more of these oils and interesterified mixtures thereof.

Fats C that are most preferred are fats selected from the group consisting of sunflower oil, high oleic sunflower oil, olive oil, soybean oil, rape seed oil, palm oil olein, olein fractions from other vegetable oils, high oleic vegetable oils and cotton seed oil.

The natural health composition can contain ursolic acid and oleanolic acid as the only components (eg by mixing of these components isolated from natural sources) however we found that we could obtain better health effects without effecting the physical effects of the blend of ursolic acid and oleanolic acid in a negative sense if the health component also comprises isoflavonoids and / or flavonoids in particular in amounts corresponding with 0.005 to 5 % of the total amount of ursolic acid and oleanolic acid.

Compositions containing the health components can be obtained from natural sources such as fruit skins, in particular skins of apples, pears, cranberries, cherries or prunes. All-spice oil is another natural source for ursolic acid / oleanolic acid mixtures. The health component can be obtained by extraction with a suitable organic solvent such as acetone.

Part of our invention are also food products having a fat phase in it and wherein the fat phase comprises at least partly the blends according to claims 2 to 7. Examples of preferred food products are spreads (low fat or full fat), dressings, mayonnaises, cheese, creams, ice creams, ice cream coatings, confectionery coatings, fillings, sauces and culinary products.

Above food products preferably comprise 10 to 90 wt%, preferably 20 to 60 wt% of a continuous fat phase. The physical effects we describe above are the most pronounced in these products.

The modification in crystallisation behavior also results in a number of other effects that are also beneficial. Therefore our. invention, according to another embodiment also comprises the use of a blend of ursolic acid and oleanolic acid in a fat blend per se or in a fat blend of a food product wherein the blend of ursolic acid and oleanolic acid is used to modify the crystallisation behavior of a fat blend or a fat blend in a final food product to

(i) increase the hardness of the fat blend or final product and/or
(ii) to improve the plasticity of the fat blend or final product and/or
(iii) to improve oral mouthfeel of the fat blend or final product and/or
(iv) to improve the heat resistance of the fat blend or final product and/or
(v) to increase the speed of crystallisation of the fat blend or final product and/or
(vi) to increase the aeration properties of the fat blend or final product and/or
(vii) to decrease drying times of ice-cream coatings.

According to a last embodiment our invention also concerns a process to make a blend with the composition according to the invention, wherein

(i) skins of a fruit such as apples, cherries, prunes, cranberries and pears are extracted with an organic solvent such as acetone
(ii) an extract of a mixture of ursolic acid and oleanolic acid is isolated and after removal of the solvent a mixture containing ursolic acid and oleanolic acid is obtained

this mixture of acids obtained in (ii) is blended with a fat in the ratios required to obtain the compositions according to the invention.

**EXAMPLES**

1. Three blends were made with the composition as given below:

| FAT COMPOSITION | ADDITIVE | HARDNESS AT 20 oC | CRYSTALL RATE AT 15 oC |
|---|---|---|---|
| | | | |
| 1.SF/hardstock 87/13 | no | 55.5 | 8% after 10 min |
| 2∗.SF/hardstock87/13 | ursolic acid / oleanolic acid ratio 60/40 2% | 81 | 11% after 10 min |
| 3.SF/hardstock87/13 | fully hardened palm oil 2% | 73 | 11% after 10 min |

∗ = according to invention

SF = sunflower oil

Hardstock = interesterified mixture of hardened palm oil and hardened palm kernel oil.

The fat was melted at 60 oC and the additive was added and distributed homogeneously in the fat. Then the blend was stabilised for 15 min at 60 oC and cooled in a waterbath of 40 oC for 5 min. The mix was warmed to 15 oC and the solid fat content in the blend was measured with a time interval of 3 min for 30 min at 15 oC. This led to the amounts of crystals formed which is an indication for the crystallisation rates as mentioned in above table.

The hardness of the fat obtained was measured at 20 oC using a standard Stevens equipment applying a penetration depth of 2 mm and a penetration speed of 0.5 mm per sec.

The fats (2) were found to have better hardness, better texture, better plasticity and processability than the fats (1) or (3) without the ursolic acid component.

2. Effects of ursolic acid extract in an ice cream coating

Experimental

The recipe for the ice cream coatings was the following:

475 g dark Callebaut 811
25 g Fat

Two different fats were used:

A 25 g CCB (reference)
B 10 g ursolic acid extract/ 15 g CCB

The following characteristics were determined by coating small magnum ice creams.

- Dripping temperature ($^{\circ}$C)
- Dripping time (s)
- Drying time (s)
- Coating weight as % of total weight
- Flexibility

Result & discussion

Table 1 Summary of results

| Characteristic | Sample A | Sample B |
|---|---|---|
| Dipping temperature ($^{\circ}$C) | 40 | 40 |
| Dripping time (s) | 17 | 15 |
| Drying time (s) | 93 | 84 |
| Coating weight (%) | 40.7 | 45.3 |
| Flexibility[1] | -/+ | ++ |

[1] The flexibility was tested by hitting the ice cream on the table.

Flexibility index:

++ = does not break
+ = difficult to break
- = breaks

-- = breaks easily

Observations:

- The coatings A leaked ice cream through small holes in the coating.

Conclusion

Coating B have a shorter dripping time than coating A. Although the coating weight is higher (and thus coating is thicker) for coating B, the drying time is shorter than for coating A. The coating with the ursolic acid extract showed the least contraction after drying.

3. Processing of Margarine

Three margarines were produced under the same process conditions.

a) Formulation

| Aqueous Phase | |
| --- | --- |
| Water | 18.48% |
| Potassium Sorbate | 0.15 |
| Citric Acid | 0.07 |
| SMP | 1.0 |

| Fat Phase | |
| --- | --- |
| Fat Blend | 80.0 |
| Hymono 8903 | 0.3 |

Fat Phase:  Product 1. 12% INES*, 88% SF (Control)
Product 2. 12% INES*, 2% BO65, 86% SF
Product 3. 12% INES*, 2% ursolic acid extract, 86% SF

BO-65 is soybean oil hardend to m.pt 65 oC

b) Process Conditions

The process line was configured as:
Premix - Pump - $A_1$-unit - $C_1$-unit - $A_2$-unit
Premix temperature was set at 60°C and 60-rpm stirrer speed.
All units were set to 15°C, with shaft speeds set to 1000 rpm. Throughput was 50 g/min. using the constant displacement pump.
For all products a coarse premix was prepared by slowly adding the prepared aqueous phase to the oil phase in the premix tank.
A 2kg-batch size was employed Silverson mixing was applied for mixing of the powder into the fat phase prior to premix formation.
The mix was allowed to stir for 15 minutes before pumping was commenced. After pumping was started, the line was allowed to run for 15 minutes before any collection of product.
The following process parameters were noted:

*INES = Stearin fraction of interesterified palm oil stearin and palm kernel stearin

| Product | $A_1$ exit (°C) | $C_1$ exit (°C) | $A_2$ exit (°C) | Line Pressure (bar) |
|---|---|---|---|---|
| Control | 20.2 | 19.4 | 17.6 | 1.0 |
| 2% BO65 | 21.1 | 20.1 | 17.8 | 2.0 |
| 2% Ursolic Acid extract | 21.3 | 20.2 | 17.7 | 2.2 |

Three tubs of each product were collected.

All tubs were placed at 5°C. After one day, one tub of each was transferred to each of 5°, 10° and 15° for evaluations after one week.

c) Product Assessment

All samples spread easily with no apparent water loss.

Stevens hardness (C-value) was measured and conductivity measurements were performed. The findings are summarized below:

| 5°C Storage | | |
|---|---|---|
| Sample | C-Value $(g/cm^2)$ | Conductivity $(\mu Scm^{-1})$ |
| Control | 630 | $<10^{-5}$ |
| 2% BO65 | 710 | $<10^{-5}$ |
| 2% Ursolic Acid extract | 960 | $<10^{-5}$ |

| 10° Storage | | |
|---|---|---|
| Sample | C-Value $(g/cm^2)$ | Conductivity $(\mu Scm^{-1})$ |
| Control | 410 | $<10^{-5}$ |
| 2% BO65 | 520 | $<10^{-5}$ |
| 2% Ursolic Acid extract | 560 | $<10^{-5}$ |

| 15°C Storage | | |
|---|---|---|
| Sample | C-Value $(g/cm^2)$ | Conductivity $(\mu Scm^{-1})$ |
| Control | 340 | $<10^{-5}$ |
| 2% BO65 | 500 | $<10^{-5}$ |
| 2% Ursolic Acid extract | 550 | $<10^{-5}$ |

Melting of the standard, 2% BO65 and 2% Ursolic Acid extract spreads was observed under microscope fitted with a temperature controlled stage. This indicated that the standard and 2% Ursolic Acid extract spreads melting in the same general temperature region (36° to 38°C). The BO65 containing sample melted in the region of 43° to 45°C. That is, the Ursolic acid extract sample was not raised in melting point (and hence waxiness), but a large difference in hardness was noted compared to the standard. This is in contrast to the BO65 equivalent that was harder than standard, but at the cost of increased melting point (i.e. waxiness.).

4. Influence of ursolic acid in chocolate

| Reference | 475 g dark Callebaut + 25 g CCB |
| M1 | 10 g PO60 in 25g CCB added to 465 g dark Callebaut |
| M2 | 10 g Ursolic acid extract in 25 g CCB added to 465 g dark Callebaut |

PO-60 is hardend palm oil with m.pt 60 oC.

Mixtures were tempered in a Leatherhead temper kettle at 30 °C using 0.1 % chocolate as seeding crystals. The viscosity was measured at temper and bars were made.

| Results: | Ref | M1 | M2 |
| --- | --- | --- | --- |
| Tau0 30°C | 8.7 Pa | 10.7 Pa | 10.1 Pa |
| Eta 30°C | 1.2 Pas | 4.7 Pas | 2.0 Pas |
| Demoulding time | 8 min | 6 min | 8 min |
| Gloss | 3/4 | 3 | 3/4 |

Heat resistance

Samples (solid chocolate bonbon) are stored during 15 hours at 40 °C.

Dimension at 20 oC: 3.3 x 2.5 cm Height 1.9 cm

Dimension at 40 oC: Ref 4.0 x 4.3 cm Height: 0.8 - 1.0 cm

M1 4.0 x 3.8 cm Height 1.0 - 1.2 cm

M2 3.3 x 3.0 cm Height 1.5 - 1.7 cm

The highest heat resistance was observed with ursolic acid extract containing sample.

Hardness

The settings on the Stevens Texture Analyzer were:

Distance :2 mm

Speed : 0.5 mm/sec.

### Temperature 20°C

|          | Ref | M1  | M2  |
|----------|-----|-----|-----|
| 1 day    | 195 | 188 | 201 |
| 1 week   | 195 | 184 | 206 |
| 1 month  | 200 | 186 | 219 |
| 2 months | 198 | 188 | 232 |
| 3 months | 203 | 184 | 224 |

### Temperature 25°C

|          | Ref | M1  | M2  |
|----------|-----|-----|-----|
| 1 day    | 129 | 130 | 144 |
| 1 week   | 167 | 165 | 164 |
| 1 month  | 158 | 168 | 174 |
| 2 months |     |     |     |
| 3 months |     |     |     |

### Temperature 30°C

|         | Ref | M1  | M2  |
|---------|-----|-----|-----|
| 1 day   | 58  | 65  | 60  |
| 1 week  | 53  | 62  | 61  |
| 1 month | 146 | 127 | 165 |

The chocolate with ursolic acid extract were found to have better hardness at all temperatures between 1 to 3 month of storage.

5. Effects of ursolic acid extract on aeration properties

Experimental

The coatings were aerated for 20 minutes by using the Hobart N-50.
The samples were measured for density and hardness.

Coating A : 475 gram Callebaut 811 + 10 gram PO60 + 15 gram CCB
Coating B : 475 gram Callebaut 811 + 10 gram Ursolic acid extract + 15 gram CCB

Results

Density measurement:

The coating was weighed in a metal cup with a known volume of 90 cm$^3$. A summary of the data is given in the table below. The density can than be calculated with the formula:

$$Density = \frac{mass\ (gram)}{volume\ (cm^3)}$$

Hardness measurement:

The aerated coating was kept at 20°C for 2 days before measurement. The settings on the Stevens Texture Analyzer were:

Distance :2 mm
Speed : 0.5 mm/sec.

A summary of the hardness (load in grams) is given in the table as well.

Results

|  | Coating A | Coating B | Units |
|---|---|---|---|
| Mass before aerating | 111.5 | 110.3 | gram |
| Density before aerating | 1.24 | 1.23 | g/cm$^3$ |
| Mass after aerating | 106.1 | 105 | gram |
| Density after aerating | 1.18 | 1.17 | g/cm$^3$ |
| Air | 4.8 | 4.8 | % |
| Hardness | 188 | 199 | gram |

Conclusion

In both coatings the same amount of air was determined after aeration whereas the hardness of the aerated coating with ursolic acid extract was found to be higher.

**Claims**

1. Blend of a vegetable fat and/or a blend of vegetable fats and at least 0.1 wt%, preferably 0.1 to 10 wt%, most preferably 0.2 to 5 wt% of a natural health composition, wherein the natural health composition comprises a mixture of ursolic acid and oleanolic acid in a weight ratio of 1:99 to 99:1, preferably 10:90 to 90:10, more preferably 75:25 to 25:75.

2. Blend according to claim 1 wherein the fat displays a solid fat content measured on a non-stabilised fat by NMR - pulse at the temperature indicated of: 5 to 90 at 5 oC; 2 to 80 at 20 oC and less than 15 at 35 oC.

3. Blend according to claims 1 and 2 wherein the blend comprises components A, B and C, wherein

   A = a natural health composition comprising a mixture of ursolic acid and oleanolic acid in a weight ratio of 1:99 to 99:1
   B = a solid fat with a solid fat content at 20 oC of at least 20, measured on the unstabilised fat by NMR-pulse, preferably at least 45, most preferably at least 60 and
   C = a fat with a content of fatty acids with 18 C-atoms with one to three double bonds of at least 40 %,

   which components A, B and C are present in amounts of:

   at least 0.1 wt% A, preferably 0.1 to 20 wt%, most preferably 0.2 to 10 wt%
   8 to 90 wt% of B, preferably 25 to 75 wt%, most preferably 40 to 70 wt% and
   0 to 85 wt% of C, preferably 15 to 65 wt%, most preferably 20 to 50 wt%.

4. Blend according to claims 1 to 3 wherein fat B is selected from the group consisting of palm oil, palm oil fractions, cocoa butter, cocoa butter equivalents, palm kernel oil, fractions of palm kernel oil, hardened vegetable oils such as hardened palm oil, hardened fractions of palm oil, hardened soybean oil, hardened sunflower oil, hardened rape seed oil, hardened fractions of soy, rape or sunflower oil, mixtures of one or more of these oils and interesterified mixtures thereof.

5. Blend according to claims 1 to 3 wherein fat C is selected from the group consisting of sunflower oil, high oleic sunflower oil, olive oil, soybean oil, rape seed oil, palm oil olein, olein fractions from vegetable oils, high oleic vegetable oils and cotton seed oil.

6. Blend according to claims 1-3 wherein the natural health composition also comprises isoflavonoids and / or flavonoids in amounts corresponding with 0.005 to 5 % of the total amount of ursolic acid and oleanolic acid.

7. Blend according to claims 1-6, wherein the natural health composition is obtained from fruit skins, in particular from the skins of apples, pears, cranberries, cherries or prunes.

8. Food products with a fat phase wherein the fat phase comprises at least partly the blend according to claims 2 to 7.

9. Food products according to claim 8, wherein the food product is selected from the group consisting of spreads (low fat or full fat), dressings, mayonnaises, cheese, creams, ice creams, ice cream coatings, confectionery coatings, fillings, sauces and culinary products

10. Food products according to claims 8 to 9, wherein the food product comprises 10 to 90 wt%, preferably 20 to 60 wt% of a continuous fat phase.

11. Use of a blend of ursolic acid and oleanolic acid in a fat blend per se or in a fat blend of a food product wherein the blend of ursolic acid and oleanolic acid is used to modify the crystallisation behavior of a fat blend or a fat blend in a final food product to

   (i) increase the hardness of the fat blend or final product and/or
   (ii) to improve the plasticity of the fat blend or final product and/or
   (iii) to improve oral mouthfeel of the fat blend or final product and/or
   (iv) to improve the heat resistance of the fat blend or final product and/or
   (v) to increase the speed of crystallisation of the fat blend or final product and/or
   (vi) to increase the aeration properties of the fat blend or final product and/or
   (vii) to decrease drying times of ice-cream coatings.

12. Process to make a blend with the composition according to claims 1 to 7, wherein

   (i) skins of a fruit such as apples, cherries, prunes and pears are extracted with an organic solvent such as acetone
   (ii) an extract of a mixture of ursolic acid and oleanolic acid is isolated and after removal of the solvent a mixture containing ursolic acid and oleanolic acid is obtained
   (iii) this mixture of acids obtained in (ii) is blended with a fat in the ratios required to obtain the compositions according to claims 1 to 7.

**Patentansprüche**

1. Mischung eines Pflanzenfetts und/oder einer Mischung von Pflanzenfetten und mindestens 0,01 Gewichts-%, vorzugsweise 0,1 bis 10 Gewichts-%, am meisten bevorzugt 0,2 bis 5 Gewichts-% einer natürlichen Gesundheitszusammensetzung, wobei die natürliche Gesundheitszusammensetzung eine Mischung von Ursolsäure und Oleanolsäure in einem Gewichtsverhältnis von 1:99 bis 99:1, vorzugsweise von 10:90 bis 90:1, am meisten bevorzugt von 75 :25 bis 25:75 aufweist.

2. Mischung nach Anspruch 1, wobei das Fett einen bei einem nicht stabilisierten Fett durch NMR-Pulse bei der angegebenen Temperatur gemessenen Festfettgehalt von: 5 bis 90 bei 5 °C, 2 bis 80 bei 6 °C und weniger als 15 bis 35 °C aufweist.

3. Mischung nach Anspruch 1 oder 2, wobei die Mischung Komponenten A, B und C aufweist, wobei

   A = eine natürliche Gesundheitszusammensetzung, welche eine Mischung von Ursolsäure und Oleanolsäure in einem Gewichtsverhältnis von 1:99 bis 99:1 aufweist,
   B = ein festes Fett mit einem bei dem unstabilisierten Fett durch NMR-Pulse bei 20 °C gemessenen Festfettgehalt von mindestens 20, vorzugsweise von mindestens 45, am meisten bevorzugt von mindestens 60 und
   C = ein Fett mit einem Gehalt an Fettsäuren mit 18 Kohlenstoffatomen mit einer bis drei Doppelbindungen von mindestens 40 %,

    wobei die Komponenten A, B und C in Anteilen vorliegen von:

    mindestens 0,1 Gewichts-% A, vorzugsweise 0,1 bis 20 Gewichts-%, am meisten bevorzugt 0,2 bis 10 Gewichts-%,

8 bis 90 Gewichts-% B, vorzugsweise 25 bis 75 Gewichts-%, am meisten bevorzugt 40 bis 70 Gewichts-%, und

0 bis 85 Gewichts-% C, vorzugsweise 15 bis 65 Gewichts-%, am meisten bevorzugt 20 bis 50 Gewichts-%.

4. Mischung nach den Ansprüchen 1 bis 3, wobei das Fett B ausgewählt ist aus der Gruppe, die aus Palmöl, Palmölfraktionen, Kakaobutter, Kakaobutteräquivalenten, Palmkernöl, Fraktionen von Palmkernöl, gehärteten Pflanzenölen, wie beispielsweise gehärtetem Palmöl, gehärteten Fraktionen von Palmöl, gehärtetem Sojaöl, gehärtetem Sonnenblumenöl, gehärtetem Rapsöl, gehärteten Fraktionen von Soja, Raps oder Sonnenblumenöl, Mischungen von einem oder mehreren diesen Ölen und miteinander veresterten Mischungen derselben besteht.

5. Mischung nach Anspruch 1 bis 3, wobei das Fett C ausgewählt ist aus der Gruppe, die aus Sonnenblumenöl, hochölsäurehaltigem Sonnenblumenöl, Olivenöl, Sojaöl, Rapsöl, Palmölolein, Oleinfraktionen von Pflanzenölen, hochölsäurehaltigen Pflanzenölen und Baumwollsaatöl besteht.

6. Mischung nach den Ansprüchen 1 bis 3, wobei die natürliche Gesundheitszusammensetzung außerdem Isoflavonoide und/oder Flavonoide in Mengen aufweist, die 0,005 bis 5 % der absoluten Menge an Ursolsäure und Oleanolsäure entsprechen.

7. Mischung nach den Ansprüchen 1 bis 6, wobei die natürliche Gesundheitszusammensetzung aus Fruchthäuten, insbesondere aus den Häuten von Äpfeln, Birnen, Preiselbeeren, Kirschen oder Pflaumen erhalten ist.

8. Lebensmittelprodukt mit einer Fettphase, wobei die Fettphase mindestens teilweise die Mischung gemäß den Ansprüchen 2 bis 7 aufweist.

9. Lebensmittelprodukt gemäß Anspruch 8, wobei das Lebensmittelprodukt ausgewählt ist aus der Gruppe, die aus (fettreduzierten oder vollfetten) Brotaufstrichen, Dressings, Majonäsen, Käsen, Cremes, Eiscremes, Einscremebeschichtungen, Konfektbeschichtungen, Füllungen, Soßen und kulinarischen Produkten besteht.

10. Lebensmittelprodukt nach den Ansprüchen 8 bis 9, wobei das Lebensmittelprodukt 10 bis 90 Gewichts-%, vorzugsweise 20 bis 60 Gewichts-% einer kontinuierlichen Fettphase aufweist.

11. Verwendung einer Mischung von Ursolsäure und Oleanolsäure in einer Fettmischung als solcher oder in einer Fettmischung eines Lebensmittelprodukts, wobei die Mischung von Ursolsäure und Oleanolsäure verwendet wird, um das Kristallisationsverhalten einer Fettmischung oder einer Fettmischung in einem letztendlichen Nahrungsmittelprodukt zu modifizieren, um

(i) die Härte der Fettmischung oder des letztendlichen Produkts zu erhöhen und/oder
(ii) um die Plastizität der Fettmischung oder des letztendlichen Produkts zu verbessern und/oder
(iii) um das Mundgefühl der Fettmischung oder des letztendlichen Produkts zu verbessern und/oder
(iv) um die Hitzebeständigkeit der Fettmischung oder des letztendlichen Produkts zu verbessern und/oder
(v) um die Geschwindigkeit der Kristallisation in der Fettmischung oder des letztendlichen Produkts zu erhöhen und/oder
(vi) um die Belüftungseigenschaften der Fettmischung oder des letztendlichen Produkts zu erhöhen und/oder
(vii) um die Trocknungszeit von Eiscremebeschichtungen herabzusetzen.

12. Verfahren zur Herstellung einer Mischung mit der Zusammensetzung gemäß den Ansprüchen 1 bis 7, wobei

(i) Häute von Früchten, wie beispielsweise Äpfeln, Kirschen, Pflaumen und Birnen, mit einem organischen Lösungsmittel, wie beispielsweise Aceton, extrahiert werden,
(ii) ein Extrakt einer Mischung von Ursolsäure und Oleanolsäure isoliert wird und nach dem Entfernen des Lösungsmittels eine Mischung, die Ursolsäure und Oleanolsäure enthält, erhalten wird,
(iii) die Mischung von Säuren, die in (ii) erhalten wird, mit einem Fett in den Verhältnissen gemischt wird, die erforderlich sind, um die Zusammensetzungen gemäß den Ansprüchen 1 bis 7 zu erhalten.

**Revendications**

1. Mélange d'une matière grasse végétale et/ou d'un mélange de matières grasses végétales et d'au moins 0,1% en poids, de préférence 0,1 à 10% en poids, de préférence surtout 0,2 à 5% en poids d'une composition diététique naturelle, dans lequel la composition diététique naturelle comprend un mélange d'acide ursolique et d'acide oléanolique en un rapport pondéral de 1:99 à 99:1, de préférence 10:90 à 90:10, de préférence encore 75:25 à 25:75.

2. Mélange selon la revendication 1, dans lequel la matière grasse présente une teneur en matière grasse solide, mesurée sur une matière grasse non-stabilisée par RMN à impulsion à la température indiquée, de : 5 à 90 à 5°C, 2 à 80 à 20°C et inférieure à 15 à 35°C.

3. Mélange selon les revendications 1 et 2, dans lequel le mélange comprend des constituants A, B et C, dans lequel :

   A = une composition diététique naturelle comprenant un mélange d'acide ursolique et d'acide oléanolique en un rapport pondéral de 1:99 à 99:1 ;
   B = une matière grasse solide avec une teneur en matière grasse solide à 20°C d'au moins 20, mesurée sur la matière grasse non-stabilisée par RMN à impulsion, de préférence au moins 45, de préférence surtout au moins 60 ; et
   C = une matière grasse avec une teneur en acides gras avec 18 atomes de carbone avec une à trois doubles liaisons d'au moins 40%,

   ces constituants A, B et C étant présents en des quantités de :

   au moins 0,1% en poids de A, de préférence 0,1 à 20% en poids, de préférence surtout 0,2 à 10% en poids ;
   8 à 90% en poids de B, de préférence 25 à 75% en poids, de préférence surtout 40 à 70% en poids ; et
   0 à 85% en poids de C, de préférence 15 à 65% en poids, de préférence surtout 20 à 50% en poids.

4. Mélange selon les revendications 1 à 3, dans lequel la matière grasse B est choisie à partir du groupe constitué d'huile de palme, de fractions d'huile de palme, de beurre de cacao, d'équivalents de beurre de cacao, d'huile de palmiste, de fractions d'huile de palmiste, d'huiles végétales durcies telles que de l'huile de palme durcie, de fractions durcies d'huile de palme, d'huile de soja durcie, d'huile de tournesol durcie, d'huile de colza durcie, de fractions durcies d'huile de soja, de colza ou de tournesol, de mélanges d'une ou de plusieurs de ces huiles et des mélanges interestérifiés de celles-ci.

5. Mélange selon les revendications 1 à 3, dans lequel la matière grasse C est choisie à partir du groupe constitué d'huile de tournesol, d'huile de tournesol fortement oléique, d'huile d'olive, d'huile de soja, d'huile de colza, d'huile de palme, d'oléine, des fractions d'oléine provenant d'huiles végétales, d'huiles végétales fortement oléiques et d'huile de graines de coton.

6. Mélange selon les revendications 1 à 3, dans lequel la composition diététique naturelle comprend aussi des isoflavonoïdes et/ou des flavonoïdes en des quantités correspondant à 0,005 à 5% de la quantité totale d'acide ursolique et d'acide oléanolique.

7. Mélange selon les revendications 1 à 6, dans lequel la composition diététique naturelle est obtenue à partir de peaux de fruits, en particulier de peaux de pommes, poires, canneberges, cerises ou prunes.

8. Produits alimentaires avec une phase grasse dans lesquels la phase grasse comprend au moins partiellement le mélange selon les revendications 2 à 7.

9. Produits alimentaires selon la revendication 8, dans lesquels le produit alimentaire est choisi dans le groupe constitué par des pâtes à tartiner (faible teneur en matière grasse ou forte teneur en matière grasse), des vinaigrettes, des mayonnaises, du fromage, des crèmes, des crèmes glacées, des couches de revêtement de crèmes glacées, des couches de revêtement de sucreries, des garnitures, des sauces et des produits culinaires.

10. Produits alimentaires selon les revendications 8 et 9, dans lesquels le produit alimentaire comprend 10 à 90% en poids, de préférence 20 à 60% en poids d'une phase grasse continue.

11. Utilisation d'un mélange d'acide ursolique et d'acide oléanolique dans un mélange de matières grasses en tant que tel ou dans un mélange de matières grasses d'un produit alimentaire, dans laquelle le mélange d'acide ursolique et d'acide oléanolique est utilisé pour modifier le comportement de cristallisation d'un mélange de matières grasses ou d'un mélange de matières grasses dans un produit alimentaire final pour :

(i) augmenter la dureté du mélange de matières grasses ou du produit final et/ou
(ii) améliorer la plasticité du mélange de matières grasses ou du produit final et/ou
(iii) améliorer la sensation en bouche du mélange de matières grasses ou du produit final et/ou
(iv) améliorer la résistance à la chaleur du mélange de matières grasses ou du produit final et/ou
(v) augmenter la vitesse de cristallisation du mélange de matières grasses ou du produit final et/ou
(vi) augmenter les propriétés d'aération du mélange de matières grasses ou du produit final et/ou
(vii) diminuer des temps de séchage de couches de revêtement de crèmes glacées.

12. Procédé de fabrication d'un mélange avec la composition selon les revendications 1 à 7, dans lequel :

(i) des peaux d'un fruit tel que des pommes, des cerises, des prunes et des poires sont extraites avec un solvant organique tel que l'acétone ;
(ii) un extrait d'un mélange d'acide ursolique et d'acide oléanolique est isolé et, après élimination du solvant, un mélange contenant de l'acide ursolique et de l'acide oléanolique est obtenu ; et
(iii) ce mélange d'acides obtenu en (ii) est mélangé a une matière grasse dans les rapports requis pour obtenir les compositions selon les revendications 1 à 7.